(19) Europäisches Patentamt
European Patent Office
Office européen des brevets

(11) **EP 4 765 546 A1**

(12) **EUROPEAN PATENT APPLICATION**

(43) Date of publication:
**24.06.2026 Bulletin 2026/26**

(21) Application number: **25226837.0**

(22) Date of filing: **23.12.2025**

(51) International Patent Classification (IPC):
***H02J 3/28*** (2026.01)   ***H02J 3/32*** (2026.01)
***H02J 3/38*** (2026.01)

(52) Cooperative Patent Classification (CPC):
**H02J 3/28; H02J 3/32; H02J 3/381;** H02J 2101/22;
H02J 2101/28; H02J 2101/30; H02J 2101/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.12.2024 KR 20240194453**

(71) Applicant: **Korea Institute of Energy Research
Daejeon 34129 (KR)**

(72) Inventors:
• **KO, Hee-Sang
63283 Jeju-si, Jeju-do (KR)**
• **JEONG, Namjo
63101 Jeju-si, Jeju-do (KR)**

• **JWA, Eun-Jin
63336 Jeju-si, Jeju-do (KR)**
• **HAN, Ji-Hyung
63303 Jeju-si, Jeju-do (KR)**
• **JEUNG, Yoon Cheul
63357 Jeju-si, Jeju-do (KR)**
• **KIM, Sun-I
63558 Jeju-si, Jeju-do (KR)**
• **KIM, Gihoon
63156 Jeju-si, Jeju-do (KR)**
• **KANG, Gil Hyeon
63097 Jeju-si, Jeju-do (KR)**

(74) Representative: **Gottschald
Patentanwälte Partnerschaft mbB
Klaus-Bungert-Straße 1
40468 Düsseldorf (DE)**

(54) **DEVICE AND METHOD FOR SMOOTHING ELECTRIC POWER**

(57) Provided is a power smoothing device comprising: a renewable energy data generating unit configured to receive and sum output power values of renewable energy sources; a data preprocessing unit configured to divide power value data output from the renewable energy data generating unit into a short-term fluctuation component, a medium-term fluctuation component, and a long-term fluctuation component; a power command calculation unit configured to calculate a first power command value to be output to a short-term response energy supply and flexibility resource based on the short-term fluctuation component, a second power command value to be output to a medium-term response energy supply and flexibility resource based on the medium-term fluctuation component, and a third power command value to be output to a long-term response energy supply and flexibility resource based on the long-term fluctuation component; and a power command output unit configured to output the first to third power command values calculated by the power command calculation unit to the corresponding energy supply and flexibility resource.

FIG. 1

**Description**

**[TECHNICAL FIELD]**

The present disclosure relates to a power smoothing device and method, and more particularly, to a smoothing device and method for stably supplying electric power output from a renewable energy source to a power system.

**[BACKGROUND ART]**

In recent years, the introduction of photovoltaic and wind power generation systems has been promoted due to environmental issues and the like. However, since power generation output from photovoltaic and wind power fluctuates greatly depending on the weather, it causes voltage fluctuations or frequency fluctuations in the connected power system. As a countermeasure, a battery system for fluctuation suppression is installed together with photovoltaic and wind power generation systems, and the output to the power system is smoothed by charging and discharging the battery system.

A moving average method is known as a method of smoothing the output fluctuations of a power system, and photovoltaic and wind power generation systems use the moving average of the power generation output of photovoltaic and wind power generation by combining it with the power supplied to the power system by the battery system.

In the case of using the moving average method, the fluctuations in the power system can be further reduced because a smoother output can be obtained by increasing the number of samples (moving average time).

However, the increase in the number of samples results in an increase in the capacity and cost of the battery system. This is because the combined output by the moving average includes a delayed component, so the difference from the instantaneous photovoltaic power generation output, i.e., the output of the battery system, is increased. Therefore, it is difficult to achieve both fluctuation suppression performance and battery capacity reduction in the moving average method.

**[SUMMARY OF THE INVENTION]**

**[TECHNICAL PROBLEM]**

An object of the present disclosure is to provide a power smoothing device and method that decomposes the variability of photovoltaic and wind power generation into short-term, medium-term, and long-term fluctuation components and adjusts the power fluctuation components using various flexible resources such as supercapacitors, heat pumps, energy storage systems, electrolyzers, and fuel cells.

**[SOLUTION TO THE PROBLEM]**

To achieve the above object, a power smoothing device according to an embodiment of the present disclosure comprises: a renewable energy data generating unit configured to receive and sum output power values of renewable energy sources; a data preprocessing unit configured to divide power value data output from the renewable energy data generating unit into a short-term fluctuation component, a medium-term fluctuation component, and a long-term fluctuation component; a power command calculation unit configured to calculate a first power command value to be output to a short-term response energy supply and flexibility resource based on the short-term fluctuation component, a second power command value to be output to a medium-term response energy supply and flexibility resource based on the medium-term fluctuation component, and a third power command value to be output to a long-term response energy supply and flexibility resource based on the long-term fluctuation component; and a power command output unit configured to output the first to third power command values calculated by the power command calculation unit to the corresponding energy supply and flexibility resource.

The data preprocessing unit comprises: a first high-pass filter configured to receive output data of the renewable energy source from the renewable energy data generating unit and extract a first high-frequency component to output the short-term fluctuation component; a first low-pass filter configured to receive output data of the renewable energy source from the renewable energy data generating unit and extract a first low-frequency component; a second high-pass filter configured to receive the first low-frequency component from the first low-pass filter and extract a second high-frequency component to output the medium-term fluctuation component; a second low-pass filter configured to receive output data from the first low-pass filter and extract a second low-frequency component; and a third high-pass filter configured to receive the second low-frequency component from the second low-pass filter and extract a third high-frequency component to output the long-term fluctuation component.

The data preprocessing unit is selected from the group consisting of a Discrete Wavelet Transform algorithm, Soft Computing, H-infinity, a Kalman filter, Power Allocation, Model Predictive Control, and a Neural Network.

The power command calculation unit determines a short-term power target value ( $P_k^{ref,sec}$ ), a medium-term power target value ( $P_k^{ref,min}$ ), and a long-term power target value ( $P_k^{ref,mins}$ ) for the current (*k*-th) time by the following equations.

$$P_k^{\text{ref,sec}} = P_{k-1}^{\text{ref,sec}} + \frac{P_k^{\text{sec}} - P_{k-n}^{\text{sec}}}{n} + offset$$

$$P_k^{\text{ref,min}} = P_{k-1}^{\text{ref,min}} + \frac{P_k^{\text{min}} - P_{k-n}^{\text{min}}}{n} + offset$$

$$P_k^{\text{ref,mins}} = P_{k-1}^{\text{ref,mins}} + \frac{P_k^{\text{mins}} - P_{k-n}^{\text{mins}}}{n} + offset$$

Here, *n* is the number of samples, $P_k^{sec}$ is a *k*-th short-term power measurement value, $P_k^{min}$ is a *k*-th medium-term power measurement value, $P_k^{\text{mins}}$ is a *k*-th long-term power measurement value, and *offset* represents a median value of facility capacity.

The power command calculation unit determines a short-term sector power command value ( $P_{\text{sector\#x}}^{\text{ref}}$ ), a medium-term sector power command value ( $P_{\text{sector\#y}}^{\text{ref}}$ ), and a long-term sector power command value ( $P_{\text{sector\#z}}^{\text{ref}}$ ) for the current (*k*-th) time by the following equations.

$$P_{\text{sector\#x}}^{\text{ref}} = \left(P_k^{\text{ref,sec}} - P_k^{\text{sec}}\right) \times \frac{C_x}{\sum_{x=1}^{a} C_x}$$

$$P_{\text{sector\#y}}^{\text{ref}} = \left(P_k^{\text{ref,min}} - P_k^{\text{min}}\right) \times \frac{C_y}{\sum_{y=1}^{b} C_y}$$

$$P_{\text{sector\#z}}^{\text{ref}} = \left(P_k^{\text{ref,mins}} - P_k^{\text{mins}}\right) \times \frac{C_z}{\sum_{z=1}^{c} C_z}$$

Here, *x* represents a short-term response resource, *y* represents a medium-term response resource, *z* represents a long-term response resource, *a* represents the total number of short-term response resources, *b* represents the total number of medium-term response resources, and c represents the total number of long-term response resources.

The power command calculation unit, when the short-term sector power command value ( $P_{\text{sector\#x}}^{\text{ref}}$ ) for one short-term response resource (*x*) among a plurality of short-term response resources is within an operating range of the short-term response resource, transmits the short-term sector power command value ( $P_{\text{sector\#x}}^{\text{ref}}$ ) as the first power command value to the power command output unit, and, when the short-term sector power command value ( $P_{\text{sector\#x}}^{\text{ref}}$ ) exceeds the operating range of the short-term response resource, calculates a short-term power command compensation value ( $P_{\text{com\#x}}^{\text{ref}}$ ) by subtracting the operating range of the short-term response resource from the short-term sector power command value ( $P_{\text{sector\#x}}^{\text{ref}}$ ), and transmits the operating range of the short-term response resource as the first power command value to the power command output unit.

The power command calculation unit, when the medium-term sector power command value ( $P_{\text{sector\#y}}^{\text{ref}}$ ) for one medium-term response resource (*y*) among a plurality of medium-term response resources is within an operating range of the medium-term response resource, transmits the medium-term sector power command value ( $P_{\text{sector\#y}}^{\text{ref}}$ ) as the second power command value to the power command output unit, and, when the medium-term sector power command value ( $P_{\text{sector\#y}}^{\text{ref}}$ ) exceeds the operating range of the medium-term response resource, calculates a medium-term power command compensation value ( $P_{\text{com}\#y}^{\text{ref}}$ ) by subtracting the operating range of the medium-term response resource from the medium-term sector power command value ( $P_{\text{sector}\#y}^{\text{ref}}$ ), and transmits the operating range of the medium-term response resource as the second power command value to the power command output unit.

The power command calculation unit, when the long-term sector power command value ( $P_{\text{sector}\#z}^{\text{ref}}$ ) for one long-term response resource (z) among a plurality of long-term response resources is within an operating range of the long-term response resource, transmits the long-term sector power command value ( $P_{\text{sector}\#z}^{\text{ref}}$ ) as the third power command value to the power command output unit, and, when the long-term sector power command value ( $P_{\text{sector}\#z}^{\text{ref}}$ ) exceeds the operating range of the long-term response resource, calculates a long-term power command compensation value ( $P_{\text{com}\#z}^{\text{ref}}$ ) by subtracting the operating range of the long-term response resource from the long-term sector power command value ( $P_{\text{sector}\#z}^{\text{ref}}$ ), and transmits the operating range of the long-term response resource as the third power command value to the power command output unit.

The power command calculation unit: when the short-term sector power command value ( $P_{\text{sector}\#x}^{\text{ref}}$ ) for one short-term response resource (x) among a plurality of short-term response resources exceeds the operating range of the short-term response resource, calculates a short-term power command compensation value ( $P_{\text{com}\#x}^{\text{ref}}$ ) by subtracting the operating range of the short-term response resource from the short-term sector power command value ( $P_{\text{sector}\#x}^{\text{ref}}$ ); when the medium-term sector power command value ( $P_{\text{sector}\#y}^{\text{ref}}$ ) for one medium-term response resource (y) among a plurality of medium-term response resources exceeds the operating range of the medium-term response resource, calculates a medium-term power command compensation value ( $P_{\text{com}\#y}^{\text{ref}}$ ) by subtracting the operating range of the medium-term response resource from the medium-term sector power command value ( $P_{\text{sector}\#y}^{\text{ref}}$ ); when the long-term sector power command value ( $P_{\text{sector}\#z}^{\text{ref}}$ ) for one long-term response resource (z) among a plurality of long-term response resources exceeds the operating range of the long-term response resource, calculates a long-term power command compensation value ( $P_{\text{com}\#z}^{\text{ref}}$ ) by subtracting the operating range of the long-term response resource from the long-term sector power command value ( $P_{\text{sector}\#z}^{\text{ref}}$ ); and calculates an energy storage system power command value ( $P_{\text{sector ESS}}^{\text{ref}}$ ) by summing the short-term power command compensation value ( $P_{\text{com}\#x}^{\text{ref}}$ ), the medium-term power command compensation value ( $P_{\text{com}\#y}^{\text{ref}}$ ), and the long-term power command compensation value ( $P_{\text{com}\#z}^{\text{ref}}$ ), and transmits the calculated energy storage system power command value ( $P_{\text{sector ESS}}^{\text{ref}}$ ) to the power command output unit.

The short-term response energy supply and flexibility resource includes at least one of a supercapacitor, an energy storage system, and a heat pump; the medium-term response energy supply and flexibility resource includes at least one of an energy storage system, a heat pump, an electrolyzer, and a fuel cell; and the long-term response energy supply and flexibility resource includes at least one of an electrolyzer and a fuel cell.

A power smoothing method according to an embodiment of the present disclosure comprises the steps of: generating renewable energy power value data by receiving and summing output power values of renewable energy sources; dividing the renewable energy power value data into a short-term fluctuation component, a medium-term fluctuation component, and a long-term fluctuation component; calculating a first power command value to be output to a short-term response energy supply and flexibility resource based on the short-term fluctuation component, a second power command value to be output to a medium-term response energy supply and flexibility resource based on the medium-term fluctuation component, and a third power command value to be output to a long-term response energy supply and flexibility resource based on the long-term fluctuation component; and outputting the first to third power command values to the corresponding energy supply and flexibility resource.

The step of calculating the first power command value to the third power command value comprises: calculating short-term, medium-term, and long-term power target values; calculating short-term, medium-term, and long-term sector power command values based on the calculated short-term, medium-term, and long-term power target values; determining whether the short-term, medium-term, and long-term sector power command values exceed operating ranges of the short-term, medium-term, and long-term sectors; and outputting, when the short-term, medium-term, and long-term sector power command values are within the operating ranges of the short-term, medium-term, and long-term sectors, the short-term, medium-term, and long-term sector power command values as the first power command value, the second power command value, and the third power command value to the short-term, medium-term, and long-term sectors, respectively.

The power smoothing method according to an embodiment of the present disclosure may further include a step of calculating an energy storage system sector power command value by summing excess amounts of the short-term, medium-term, and long-term sectors when the short-term, medium-term, and long-term sector power command values exceed operating ranges of the short-term, medium-term, and long-term sectors; and outputting the calculated energy storage system sector power command value to the energy storage system sector.

[ADVANTAGEOUS EFFECTS OF THE INVENTION]

The power smoothing device and method according to embodiments of the present disclosure can provide the following effects.

First, the fluctuation of wind and photovoltaic power can be decomposed into short-term, medium-term, and long-term components, and the fluctuation can be smoothed out with appropriate energy flexibility resources to suppress the rise in electricity supply costs.

Second, the fluctuation of photovoltaic and wind power generation can be regulated by various flexible resources such as supercapacitors, heat pumps, electrolyzers, and fuel cells, and power exceeding the operating range of short-term to long-term response resources can be regulated by energy storage systems to achieve a stable power supply.

Third, the power command value is calculated by considering the sector-specific response speed, i.e., the speed at which power can be varied, and the efficiency of the sectors can be increased through appropriate power variation for each sector.

[BRIEF DESCRIPTION OF DRAWINGS]

FIG. 1 is a schematic diagram showing the configuration of a power smoothing device according to one embodiment of the present disclosure.

FIG. 2 is a graph showing the sum waveform of renewable energy output data summed in a renewable energy data generating unit according to one embodiment of the present disclosure.

FIG. 3 is a schematic diagram showing the configuration of a data preprocessing unit according to one embodiment of the present disclosure.

FIG. 4 is a diagram showing the result of decomposing output data of photovoltaic and wind power generation devices into periods by a data preprocessing unit according to one embodiment of the present disclosure.

FIG. 5 is a schematic diagram showing the operation of a power command calculation unit according to one embodiment of the present disclosure.

FIG. 6 is a schematic diagram showing the structure of an energy supply and flexibility resource according to one embodiment of the present disclosure.

FIG. 7 is a flow chart showing a power smoothing method according to one embodiment of the present disclosure.

[DETAILED DESCRIPTION OF THE INVENTION]

The terminology used herein is for the purpose of describing particular embodiments only and is not intended to limit the present disclosure. The singular forms used herein also include the plural forms unless the context clearly indicates otherwise. The term "comprising" or "including" as used in the specification specifies the presence of a particular characteristic, region, integer, step, operation, element and/or component, but does not exclude the presence or addition of other particular characteristics, regions, integers, steps, operations, elements, components and/or groups.

Terms or words used in this specification and claims should not be interpreted as limited to their usual or dictionary meanings, but should be interpreted as meanings and concepts that conform to the technical idea of the present disclosure, based on the principle that the inventor can appropriately define the concept of the term to explain his or her own invention in the best way.

In addition, regardless of the figures, identical or corresponding components are given identical or similar reference numerals and redundant descriptions thereof are omitted, and for the convenience of explanation, the size and shape of each component depicted may be exaggerated or reduced.

The advantages and features of the present disclosure, and the methods of achieving them, will become apparent with reference to the embodiments described in detail below in conjunction with the accompanying drawings. However, the present disclosure is not limited to the embodiments disclosed below, but may be implemented in various other forms. The embodiments are provided merely to ensure a complete disclosure of the present disclosure and to fully inform those skilled in the art of the scope of the present disclosure. The present disclosure is defined only by the scope of the appended claims. Therefore, in some embodiments, well-known process steps, well-known device structures, and well-known technologies are not described in detail so as not to obscure the present disclosure. Throughout the specification, the same reference numerals refer to the same elements.

Unless otherwise defined, all terms (including technical and scientific terms) used herein may be used in a meaning that can be commonly understood by one of ordinary skill in the art to which the present disclosure belongs. Also, terms defined in commonly used dictionaries are not to be interpreted in an idealized or overly formal sense unless explicitly defined.

Accordingly, the embodiments described in this specification and the configurations illustrated in the drawings are merely the most preferred embodiments of the present disclosure and do not represent all of the technical ideas of the present disclosure. Therefore, it should be understood that there may be various equivalents and modifications that can replace them at the time of filing this application.

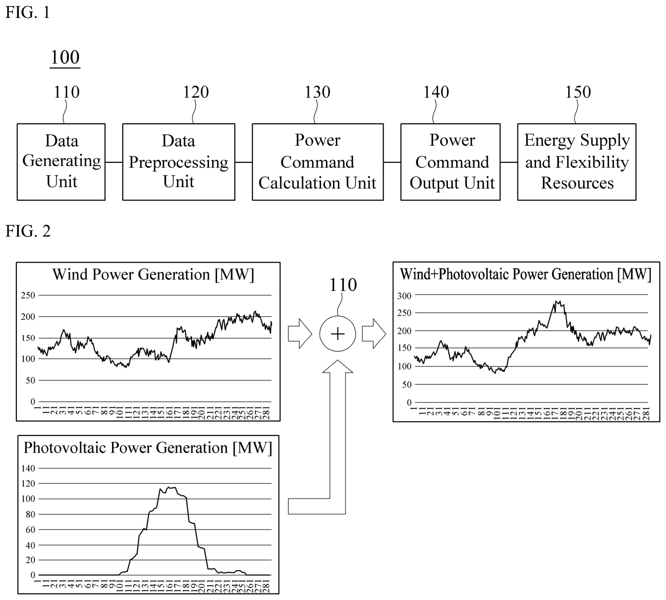

Hereinafter, the power smoothing device according to the present disclosure will be described in detail with reference to FIGS. 1 to 4.

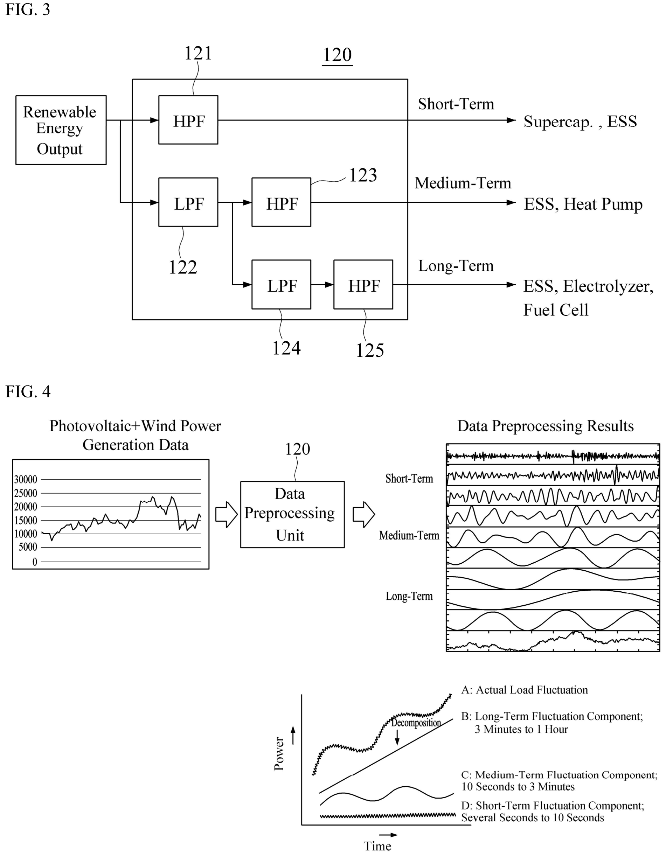

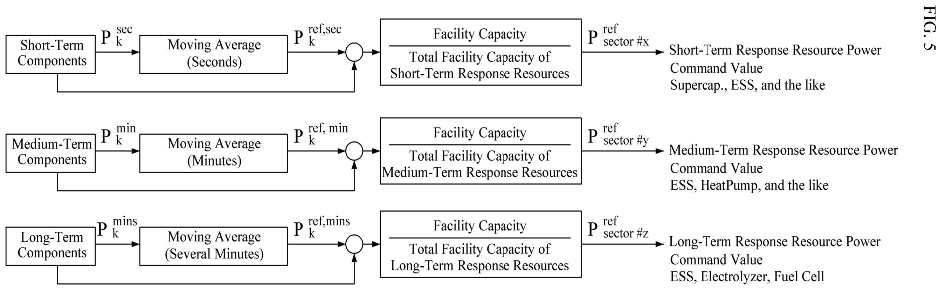

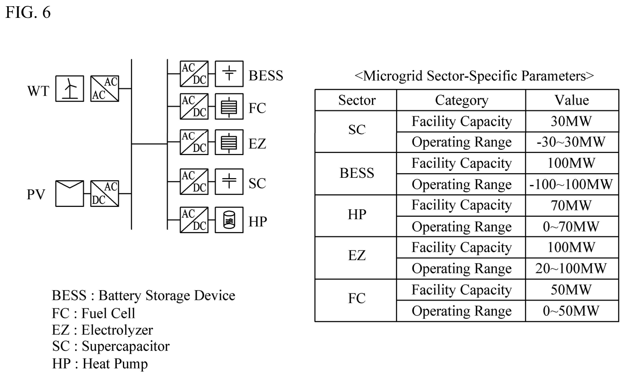

FIG. 1 is a schematic diagram showing the configuration of a power smoothing device according to one embodiment of the present disclosure. FIG. 2 is a graph showing the sum waveform of renewable energy output data summed in a renewable energy data generating unit according to one embodiment of the present disclosure. FIG. 3 is a schematic diagram showing the configuration of a data preprocessing unit according to one embodiment of the present disclosure. FIG. 4 is a diagram showing the result of decomposing output data of photovoltaic and wind power generation devices into periods by a data preprocessing unit according to one embodiment of the present disclosure. FIG. 5 is a schematic diagram showing the operation of a power command calculation unit according to one embodiment of the present disclosure. FIG. 6 is a schematic diagram showing the structure of energy supply and flexibility resources according to one embodiment of the present disclosure.

Referring to FIG. 1, a power smoothing device 100 according to an embodiment of the present disclosure includes: a renewable energy data generating unit 110 configured to receive and sum output power values of renewable energy sources; a data preprocessing unit 120 configured to divide power value data output from the renewable energy data generating unit 110 into a short-term fluctuation component, a medium-term fluctuation component, and a long-term fluctuation component; a power command calculation unit 130 configured to calculate a first power command value to be output to a short-term response energy supply and flexibility resource 150 based on the short-term fluctuation component, a second power command value to be output to a medium-term response energy supply and flexibility resource 150 based on the medium-term fluctuation component, and a third power command value to be output to a long-term response energy supply and flexibility resource 150 based on the long-term fluctuation component; and a power command output unit 140 configured to output the first to third power command values calculated by the power command calculation unit 130 to the corresponding energy supply and flexibility resource 150.

Referring to FIG. 1, the renewable energy data generating unit 110 receives output power values from renewable energy sources, such as a wind power generation device or a photovoltaic power generation device, and sums them to generate renewable energy data.

Referring to FIGS. 1, 3, and 4, the data preprocessing unit 120 divides the power data output from a renewable energy source, for example, a wind power generation device or a photovoltaic power generation device, by period, that is, into a short-term fluctuation component, a medium-term fluctuation component, and a long-term fluctuation component Referring back to FIG. 3, the data preprocessing unit 120 may include: a first high-pass filter 121 configured to receive output data of the renewable energy source from the renewable energy data generating unit 110 and extract a first high-frequency component to output a short-term fluctuation component; a first low-pass filter 122 configured to receive output data of the renewable energy source from the data generating unit 110 and extract a first low-frequency component; a second high-pass filter 123 configured to receive the first low-frequency component from the first low-pass filter 122 and extract a second high-frequency component to output a medium-term fluctuation component; a second low-pass filter 124 configured to receive output data from the first low-pass filter 122 and extract a second low-frequency component; and a third high-pass filter 125 configured to receive the second low-frequency component from the second low-pass filter 124 and extract a third high-frequency component to output a long-term fluctuation component.

The data preprocessing unit 120 may include a Discrete Wavelet Transform (DWT) algorithm. In addition, without being limited thereto, the data preprocessing unit 120 may be selected from the group consisting of Soft Computing, H-infinity, Kalman filter, Power Allocation, Model Predictive Control (MPC), and Neural Network.

The data preprocessing unit 120 divides components with a fluctuation period of 10 seconds or less into short-term fluctuation components, divides components with a fluctuation period of more than 10 seconds but less than 3 minutes into medium-term fluctuation components, and divides components with a fluctuation period of more than 3 minutes but less than 1 hour into long-term fluctuation components. The fluctuation period may be adjusted according to the sensitivity of the power system.

Referring to FIG. 5, the power command calculation unit 130 calculates a first power command value to be output to a short-term response energy supply and flexibility resource 150 based on the short-term fluctuation component, a second power command value to be output to a medium-term response energy supply and flexibility resource 150 based on the medium-term fluctuation component, and a third power command value to be output to a long-term response energy supply and flexibility resource 150 based on the long-term fluctuation component, respectively.

The power command calculation unit 130 determines a short-term power target value ( $P_k^{ref,sec}$ ), a medium-term power target value ( $P_k^{ref,min}$ ), and a long-term power target value ( $P_k^{ref,mins}$ ) for the current (*k*-th) time by the following equations.

$$P_k^{\text{ref,sec}} = P_{k-1}^{\text{ref,sec}} + \frac{P_k^{\text{sec}} - P_{k-n}^{\text{sec}}}{n} + offset$$

$$P_k^{\text{ref,min}} = P_{k-1}^{\text{ref,min}} + \frac{P_k^{\text{min}} - P_{k-n}^{\text{min}}}{n} + offset$$

$$P_k^{\text{ref,mins}} = P_{k-1}^{\text{ref,mins}} + \frac{P_k^{\text{mins}} - P_{k-n}^{\text{mins}}}{n} + offset$$

Here, n is the number of samples, $P_k^{sec}$ is a k-th short-term power measurement value, $P_k^{min}$ is a *k*-th medium-term power measurement value, $P_k^{mins}$ is a *k*-th long-term power measurement value, and *offset* represents a median value of facility capacity.

For example, when an electrolyzer is 100 MW, the *offset* is 50 MW; when a fuel cell is 50 MW, the *offset* is 25 MW; and in the case of an electric storage device (Energy Storage System) or a supercapacitor, the *offset* is 0 MW.

The power command calculation unit 130 determines a short-term sector power command value ( $P_{\text{sector\#x}}^{\text{ref}}$ ), a medium-term sector power command value ( $P_{\text{sector\#y}}^{\text{ref}}$ ), and a long-term sector power command value ( $P_{\text{sector\#z}}^{\text{ref}}$ ) for the current (*k*-th) time by the following equations.

$$P_{\text{sector\#x}}^{\text{ref}} = \left( P_k^{\text{ref,sec}} - P_k^{\text{sec}} \right) \times \frac{c_x}{\sum_{x=1}^{a} c_x}$$

$$P_{\text{sector\#y}}^{\text{ref}} = \left( P_k^{\text{ref,min}} - P_k^{\text{min}} \right) \times \frac{c_y}{\sum_{y=1}^{b} c_y}$$

$$P_{\text{sector\#z}}^{\text{ref}} = \left( P_k^{\text{ref,mins}} - P_k^{\text{mins}} \right) \times \frac{c_z}{\sum_{z=1}^{c} c_z}$$

Here, *x* represents a short-term response resource, *y* represents a medium-term response resource, *z* represents a long-term response resource, *a* represents the total number of short-term response resources, *b* represents the total number of medium-term response resources, and c represents the total number of long-term response resources.

The power command calculation unit 130, when the short-term sector power command value ( $P_{\text{sector\#x}}^{\text{ref}}$ ) for one short-term response resource (*x*) among a plurality of short-term response resources is within an operating range of the short-term response resource, transmits the short-term sector power command value ( $P_{\text{sector\#x}}^{\text{ref}}$ ) as the first power command value to the power command output unit 140, and, when the short-term sector power command value ( $P_{\text{sector\#x}}^{\text{ref}}$ ) exceeds the operating range of the short-term response resource, calculates a short-term power command compensation value ( $P_{\text{com\#x}}^{\text{ref}}$ ) by subtracting the operating range of the short-term response resource from the short-term sector power command value ( $P_{\text{sector\#x}}^{\text{ref}}$ ), and transmits the operating range of the short-term response resource as the first power command value to the power command output unit 140.

In addition, when the medium-term sector power command value ( $P_{\text{sector\#y}}^{\text{ref}}$ ) for one medium-term response resource ($y$) among a plurality of medium-term response resources is within an operating range of the medium-term response resource, the power command calculation unit 130 transmits the medium-term sector power command value ( $P_{\text{sector\#y}}^{\text{ref}}$ ) as the second power command value to the power command output unit 140, and, when the medium-term sector power command value ( $P_{\text{sector\#y}}^{\text{ref}}$ ) exceeds the operating range of the medium-term response resource, calculates a medium-term power command compensation value ( $P_{\text{com\#y}}^{\text{ref}}$ ) by subtracting the operating range of the medium-term response resource from the medium-term sector power command value ( $P_{\text{sector\#y}}^{\text{ref}}$ ), and transmits the operating range of the medium-term response resource as the second power command value to the power command output unit 140.

In addition, when the long-term sector power command value ( $P_{\text{sector\#z}}^{\text{ref}}$ ) for one long-term response resource ($z$) among a plurality of long-term response resources is within an operating range of the long-term response resource, the power command calculation unit 130 transmits the long-term sector power command value ( $P_{\text{sector\#z}}^{\text{ref}}$ ) as the third power command value to the power command output unit 140, and, when the long-term sector power command value ( $P_{\text{sector\#z}}^{\text{ref}}$ ) exceeds the operating range of the long-term response resource, calculates a long-term power command compensation value ( $P_{\text{com\#z}}^{\text{ref}}$ ) by subtracting the operating range of the long-term response resource from the long-term sector power command value ( $P_{\text{sector\#z}}^{\text{ref}}$ ), and transmits the operating range of the long-term response resource as the third power command value to the power command output unit 140.

Meanwhile, the power command calculation unit 130 sums the short-term power command compensation value ( $P_{\text{com\#x}}^{\text{ref}}$ ), the medium-term power command compensation value ( $P_{\text{com\#y}}^{\text{ref}}$ ), and the long-term power command compensation value ( $P_{\text{com\#z}}^{\text{ref}}$ ), and transmits the sum to the power command output unit 140 as an energy storage system power command value ( $P_{\text{sector ESS}}^{\text{ref}}$ ).

The short-term response energy supply and flexibility resource includes at least one of a supercapacitor, an energy storage system, and a heat pump.

The medium-term response energy supply and flexibility resource includes at least one of an energy storage system, a heat pump, an electrolyzer, and a fuel cell.

The long-term response energy supply and flexibility resource includes at least one of an electrolyzer and a fuel cell.

The power command output unit 140 outputs the first to third power command values and the energy storage system power command value of the power command calculation unit 130 to the corresponding energy supply and flexibility resource 150.

The energy supply and flexibility resources 150 may be configured as microgrids.

Referring to FIG. 6, the energy supply and flexibility resource 150 includes at least one selected from the group consisting of a battery energy storage system (BESS), a fuel cell (FC), an electrolyzer (EZ), a supercapacitor (SC), and a heat pump (HP).

The battery energy storage system (BESS) is used as a power means to respond to all of the short-term, medium-term, and long-term.

The supercapacitor (SC) is used as a power means to respond to the short-term.

The heat pump (HP) is used as a power means to respond to the medium-term.

The fuel cell (FC) and the electrolyzer (EZ) are used as power means to respond to the long-term.

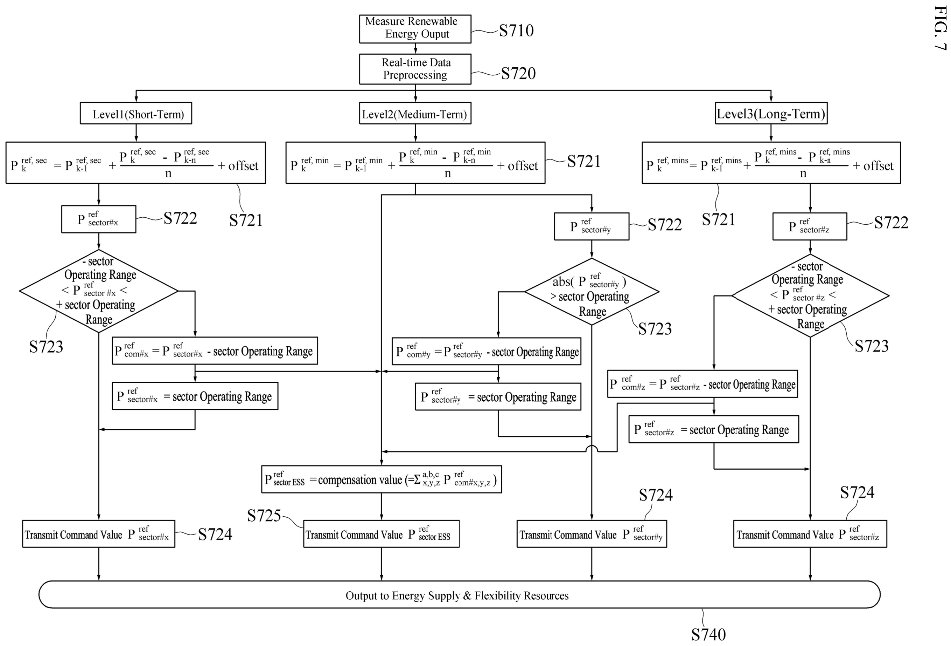

Hereinafter, a power smoothing method according to an embodiment of the present disclosure will be described with reference to the drawings. FIG. 7 is a flow chart showing a power smoothing method according to an embodiment of the present disclosure.

Referring to FIG. 7, a power smoothing method according to an embodiment of the present disclosure comprises: generating renewable energy power value data by receiving and summing output power values of renewable energy sources (S710); dividing the renewable energy power value data into a short-term fluctuation component, a medium-term fluctuation component, and a long-term fluctuation component (S720); calculating a first power command value to be output to a short-term response energy supply and flexibility resource 150 based on the short-term fluctuation component, a second power command value to be output to a medium-term response energy supply and flexibility resource 150 based on the medium-term fluctuation component, and a third power command value to be output to a long-term response energy supply and flexibility resource 150 based on the long-term fluctuation component**; and outputting the calculated first to third power command values to the corresponding energy supply and flexibility resource 150 (S740).

The step of dividing into short-term, medium-term, and long-term fluctuation components (S720) may be performed using a Discrete Wavelet Transform algorithm. In addition, the step of dividing into short-term, medium-term, and long-term fluctuation components is not limited thereto and may be performed by one selected from the group consisting of Soft Computing, H-infinity, Kalman filter, Power Allocation, Model Predictive Control, and Neural Network.

Referring back to FIG. 7, the step of calculating the first to third power command values includes: calculating short-term, medium-term, and long-term power target values (S721); calculating short-term, medium-term, and long-term sector power command values based on the calculated short-term, medium-term, and long-term power target values (S722); determining whether the short-term, medium-term, and long-term sector power command values exceed operating ranges of the short-term, medium-term, and long-term sectors (S723); and outputting, when the short-term, medium-term, and long-term sector power command values are within the operating ranges of the short-term, medium-term, and long-term sectors, the short-term, medium-term, and long-term sector power command values as the first power command value, the second power command value, and the third power command value to the short-term, medium-term, and long-term sectors, respectively (S724).

Meanwhile, when the short-term, medium-term, and long-term sector power command values exceed the operating ranges of the short-term, medium-term, and long-term sectors, the method may further include calculating an energy storage system sector power command value by summing excess amounts of the short-term, medium-term, and long-term sectors and outputting the calculated energy storage system sector power command value to the energy storage system sector (S725).

In the step of calculating the first to third power command values, the short-term power target value ($P_k^{ref,sec}$), the medium-term power target value ($P_k^{ref,min}$), and the long-term power target value ($P_k^{ref,mins}$) for the current (*k*-th) time are determined by the following equations.

$$P_k^{\text{ref,sec}} = P_{k-1}^{\text{ref,sec}} + \frac{P_k^{\text{sec}} - P_{k-n}^{\text{sec}}}{n} + offset$$

$$P_k^{\text{ref,min}} = P_{k-1}^{\text{ref,min}} + \frac{P_k^{\text{min}} - P_{k-n}^{\text{min}}}{n} + offset$$

$$P_k^{\text{ref,mins}} = P_{k-1}^{\text{ref,mins}} + \frac{P_k^{\text{mins}} - P_{k-n}^{\text{mins}}}{n} + offset$$

Here, n is the number of samples, $P_k^{sec}$ is a *k*-th short-term power measurement value, $P_k^{min}$ is a *k*-th medium-term power measurement value, $P_k^{\text{mins}}$ is a *k*-th long-term power measurement value, and *offset* represents a median value of facility capacity.

For example, when an electrolyzer is 100 MW, the *offset* is 50 MW; when a fuel cell is 50 MW, the *offset* is 25 MW; and in the case of an electric storage device (Energy Storage System) or a supercapacitor, the *offset* is 0 MW.

In addition, the short-term sector power command value ($P_{\text{sector\#x}}^{\text{ref}}$), the medium-term sector power command value ($P_{\text{sector\#y}}^{\text{ref}}$), and the long-term sector power command value ($P_{\text{sector\#z}}^{\text{ref}}$) for the current (*k*-th) time are determined by the following equations.

$$P_{\text{sector\#x}}^{\text{ref}} = \left(P_k^{\text{ref,sec}} - P_k^{\text{sec}}\right) \times \frac{C_x}{\sum_{x=1}^{a} C_x}$$

$$P_{\text{sector\#y}}^{\text{ref}} = \left(P_k^{\text{ref,min}} - P_k^{\text{min}}\right) \times \frac{C_y}{\sum_{y=1}^{b} C_y}$$

$$P_{\text{sector\#z}}^{\text{ref}} = \left(P_k^{\text{ref,mins}} - P_k^{\text{mins}}\right) \times \frac{C_z}{\sum_{z=1}^{c} C_z}$$

Here, *x* represents a short-term response resource, *y* represents a medium-term response resource, *z* represents a long-term response resource, *a* represents the total number of short-term response resources, *b* represents the total number of medium-term response resources, and $c$ represents the total number of long-term response resources.

When the short-term sector power command value ( $P_{\text{sector\#x}}^{\text{ref}}$ ) for one short-term response resource ($x$) among a plurality of short-term response resources is within an operating range of the short-term response resource, the short-term sector power command value ( $P_{\text{sector\#x}}^{\text{ref}}$ ) is output as the first power command value.

When the short-term sector power command value ( $P_{\text{sector\#x}}^{\text{ref}}$ ) exceeds the operating range of the short-term response resource, a short-term power command compensation value ( $P_{\text{com\#x}}^{\text{ref}}$ ) is calculated by subtracting the operating range of the short-term response resource from the short-term sector power command value ( $P_{\text{sector\#x}}^{\text{ref}}$ ), and the operating range of the short-term response resource is output as the first power command value.

In addition, when the medium-term sector power command value ( $P_{\text{sector\#y}}^{\text{ref}}$ ) for one medium-term response resource ($y$) among a plurality of medium-term response resources is within an operating range of the medium-term response resource, the medium-term sector power command value ( $P_{\text{sector\#y}}^{\text{ref}}$ ) is output as the second power command value.

When the medium-term sector power command value ( $P_{\text{sector\#y}}^{\text{ref}}$ ) exceeds the operating range of the medium-term response resource, a medium-term power command compensation value ( $P_{\text{com\#y}}^{\text{ref}}$ ) is calculated by subtracting the operating range of the medium-term response resource from the medium-term sector power command value ( $P_{\text{sector\#y}}^{\text{ref}}$ ), and the operating range of the medium-term response resource is output as the second power command value.

In addition, when the long-term sector power command value ( $P_{\text{sector\#z}}^{\text{ref}}$ ) for one long-term response resource ($z$) among a plurality of long-term response resources is within the operating range of the long-term response resource, the long-term sector power command value ( $P_{\text{sector\#z}}^{\text{ref}}$ ) is output as the third power command value.

When the long-term sector power command value ( $P_{\text{sector\#z}}^{\text{ref}}$ ) exceeds the operating range of the long-term response resource, a long-term power command compensation value ( $P_{\text{com\#z}}^{\text{ref}}$ ) is calculated by subtracting the operating range of the long-term response resource from the long-term sector power command value ( $P_{\text{sector\#z}}^{\text{ref}}$ ), and the operating range of the long-term response resource is output as the third power command value.

Meanwhile, an energy storage system sector power command value ( $P_{\text{sector ESS}}^{\text{ref}}$ ) is calculated by summing the short-term power command compensation value ( $P_{\text{com\#x}}^{\text{ref}}$ ), the medium-term power command compensation value ( $P_{\text{com\#y}}^{\text{ref}}$ ), and the long-term power command compensation value ( $P_{\text{com\#z}}^{\text{ref}}$ ), and the calculated energy storage system sector power command value is output to the energy storage system sector.

Those skilled in the art to which the present disclosure pertains will understand that the present disclosure can be implemented in other specific forms without changing the technical spirit or essential characteristics thereof. Therefore, it should be understood that the embodiments described above are exemplary in all respects and not limiting. The scope of the present disclosure is defined by the scope of the claims described below rather than the detailed description above, and all changes or modifications derived from the meaning and scope of the claims and their equivalent concepts should be interpreted as being included in the scope of the present disclosure.

Meanwhile, the present specification and drawings disclose preferred embodiments of the present disclosure. Although specific terms are used, they are used in a general and descriptive sense only to facilitate the understanding of the technical contents of the present disclosure and are not intended to limit the scope of the present disclosure. It will be apparent to those skilled in the art to which the present disclosure pertains that various modifications based on the technical spirit of the present disclosure are possible in addition to the embodiments disclosed herein.

**[REFERENCE NUMERALS]**

100: Power Smoothing Device
110: Data Generating Unit

120: Data Preprocessing Unit
121: First High-Pass Filter
122: First Low-Pass Filter
123: Second High-Pass Filter
124: Second Low-Pass Filter
125: Third High-Pass Filter
130: Power Command Calculation Unit
140: Power Command Output Unit
150: Energy Supply and Flexibility Resources

**Claims**

1. A power smoothing device comprising: a renewable energy data generating unit (110) configured to receive and sum output power values of renewable energy sources;

   a data preprocessing unit (120) configured to divide power value data output from the renewable energy data generating unit (110) into a short-term fluctuation component, a medium-term fluctuation component, and a long-term fluctuation component;
   a power command calculation unit (130) configured to calculate a first power command value to be output to a short-term response energy supply and flexibility resource (150) based on the short-term fluctuation component, a second power command value to be output to a medium-term response energy supply and flexibility resource (150) based on the medium-term fluctuation component, and a third power command value to be output to a long-term response energy supply and flexibility resource (150) based on the long-term fluctuation component; and
   a power command output unit (140) configured to output the first to third power command values calculated by the power command calculation unit (130) to the corresponding energy supply and flexibility resource (150).

2. The power smoothing device of claim 1, wherein the data preprocessing unit (120) comprises:

   a first high-pass filter (121) configured to receive output data of the renewable energy source from the renewable energy data generating unit (110) and extract a first high-frequency component to output the short-term fluctuation component;
   a first low-pass filter (122) configured to receive output data of the renewable energy source from the renewable energy data generating unit (110) and extract a first low-frequency component;
   a second high-pass filter (123) configured to receive the first low-frequency component from the first low-pass filter (122) and extract a second high-frequency component to output the medium-term fluctuation component;
   a second low-pass filter (124) configured to receive output data from the first low-pass filter (122) and extract a second low-frequency component; and
   a third high-pass filter (125) configured to receive the second low-frequency component from the second low-pass filter (124) and extract a third high-frequency component to output the long-term fluctuation component.

3. The power smoothing device of claim 1, wherein the data preprocessing unit (120) is selected from the group consisting of a Discrete Wavelet Transform algorithm, Soft Computing, H-infinity, a Kalman filter, Power Allocation, Model Predictive Control, and a Neural Network.

4. The power smoothing device of claim 1, wherein

   the power command calculation unit (130) determines a short-term power target value ($P_k^{ref,sec}$), a medium-term power target value ($P_k^{ref,min}$), and a long-term power target value ($P_k^{ref,mins}$) for the current ($k$-th) time by the following equations:

   $$P_k^{ref,sec} = P_{k-1}^{ref,sec} + \frac{P_k^{sec} - P_{k-n}^{sec}}{n} + offset$$

$$P_k^{\text{ref,min}} = P_{k-1}^{\text{ref,min}} + \frac{P_k^{\min} - P_{k-n}^{\min}}{n} + offset$$

$$P_k^{\text{ref,mins}} = P_{k-1}^{\text{ref,mins}} + \frac{P_k^{\text{mins}} - P_{k-n}^{\text{mins}}}{n} + offset$$

where $n$ is the number of samples, $P_k^{sec}$ is a k-th short-term power measurement value, $P_k^{min}$ is a k-th medium-term power measurement value, $P_k^{\text{mins}}$ is a $k$-th long-term power measurement value, and *offset* represents a median value of facility capacity.

5. The power smoothing device of claim 4, wherein

the power command calculation unit (130) determines a short-term sector power command value ( $P_{\text{sector\#x}}^{\text{ref}}$ ), a medium-term sector power command value ( $P_{\text{sector\#y}}^{\text{ref}}$ ), and a long-term sector power command value ( $P_{\text{sector\#z}}^{\text{ref}}$ ) for the current (*k*-th) time by the following equations:

$$P_{\text{sector\#x}}^{\text{ref}} = \left(P_k^{\text{ref,sec}} - P_k^{\text{sec}}\right) \times \frac{C_x}{\sum_{x=1}^{a} C_x}$$

$$P_{\text{sector\#y}}^{\text{ref}} = \left(P_k^{\text{ref,min}} - P_k^{\min}\right) \times \frac{C_y}{\sum_{y=1}^{b} C_y}$$

$$P_{\text{sector\#z}}^{\text{ref}} = \left(P_k^{\text{ref,mins}} - P_k^{\text{mins}}\right) \times \frac{C_z}{\sum_{z=1}^{c} C_z}$$

where $x$ represents a short-term response resource, $y$ represents a medium-term response resource, $z$ represents a long-term response resource, $a$ represents the total number of short-term response resources, $b$ represents the total number of medium-term response resources, and $c$ represents the total number of long-term response resources.

6. The power smoothing device of claim 5, wherein

the power command calculation unit (130), when the short-term sector power command value ( $P_{\text{sector\#x}}^{\text{ref}}$ ) for one short-term response resource (*x*) among a plurality of short-term response resources is within an operating range of the short-term response resource, transmits the short-term sector power command value ( $P_{\text{sector\#x}}^{\text{ref}}$ ) as the first power command value to the power command output unit (140), and, when the short-term sector power command value ( $P_{\text{sector\#x}}^{\text{ref}}$ ) exceeds the operating range of the short-term response resource, calculates a short-term power command compensation value ( $P_{\text{com\#x}}^{\text{ref}}$ ) by subtracting the operating range of the short-term response resource from the short-term sector power command value ( $P_{\text{sector\#x}}^{\text{ref}}$ ), and transmits the operating range of the short-term response resource as the first power command value to the power command output unit (140).

7. The power smoothing device of claim 5, wherein

the power command calculation unit (130), when the medium-term sector power command value ( $P_{\text{sector\#y}}^{\text{ref}}$ ) for one medium-term response resource (*y*) among a plurality of medium-term response resources is within an operating range of the medium-term response resource, transmits the medium-term sector power command value ( $P_{\text{sector\#y}}^{\text{ref}}$ ) as the second power command value to the power command output unit (140), and, when the medium-term sector power command value ( $P_{\text{sector\#y}}^{\text{ref}}$ ) exceeds the operating range of the medium-term response resource, calculates a medium-term power command compensation value ( $P_{\text{com\#y}}^{\text{ref}}$ ) by subtracting the operating range of the medium-term response resource from the medium-term sector power command value ( $P_{\text{sector\#y}}^{\text{ref}}$ ), and transmits the operating range of the medium-term response resource as the second power command value to the power command output unit (140).

8. The power smoothing device of claim 5, wherein

the power command calculation unit (130), when the long-term sector power command value ( $P_{\text{sector\#z}}^{\text{ref}}$ ) for one long-term response resource (*z*) among a plurality of long-term response resources is within an operating range of the long-term response resource, transmits the long-term sector power command value ( $P_{\text{sector\#z}}^{\text{ref}}$ ) as the third power command value to the power command output unit (140), and, when the long-term sector power command value ( $P_{\text{sector\#z}}^{\text{ref}}$ ) exceeds the operating range of the long-term response resource, calculates a long-term power command compensation value ( $P_{\text{com\#z}}^{\text{ref}}$ ) by subtracting the operating range of the long-term response resource from the long-term sector power command value ( $P_{\text{sector\#z}}^{\text{ref}}$ ), and transmits the operating range of the long-term response resource as the third power command value to the power command output unit (140).

9. The power smoothing device of claim 5, wherein

the power command calculation unit (130): when the short-term sector power command value ( $P_{\text{sector\#x}}^{\text{ref}}$ ) for one short-term response resource (*x*) among a plurality of short-term response resources exceeds the operating range of the short-term response resource, calculates a short-term power command compensation value ( $P_{\text{com\#x}}^{\text{ref}}$ ) by subtracting the operating range of the short-term response resource from the short-term sector power command value ( $P_{\text{sector\#x}}^{\text{ref}}$ ); when the medium-term sector power command value ( $P_{\text{sector\#y}}^{\text{ref}}$ ) for one medium-term response resource (*y*) among a plurality of medium-term response resources exceeds the operating range of the medium-term response resource, calculates a medium-term power command compensation value ( $P_{\text{com\#y}}^{\text{ref}}$ ) by subtracting the operating range of the medium-term response resource from the medium-term sector power command value ( $P_{\text{sector\#y}}^{\text{ref}}$ ); when the long-term sector power command value ( $P_{\text{sector\#z}}^{\text{ref}}$ ) for one long-term response resource (*z*) among a plurality of long-term response resources exceeds the operating range of the long-term response resource, calculates a long-term power command compensation value ( $P_{\text{com\#z}}^{\text{ref}}$ ) by subtracting the operating range of the long-term response resource from the long-term sector power command value ( $P_{\text{sector\#z}}^{\text{ref}}$ ); and calculates an energy storage system power command value ( $P_{\text{sector ESS}}^{\text{ref}}$ ) by summing the short-term power command compensation value ( $P_{\text{com\#x}}^{\text{ref}}$ ), the medium-term power command compensation value ( $P_{\text{com\#y}}^{\text{ref}}$ ), and the long-term power command compensation value ( $P_{\text{com\#z}}^{\text{ref}}$ ), and transmits the calculated energy storage system power command value ( $P_{\text{sector ESS}}^{\text{ref}}$ ) to the power command output unit (140).

10. The power smoothing device of claim 1, wherein
the short-term response energy supply and flexibility resource (150) includes at least one of a supercapacitor, an energy storage system, and a heat pump; the medium-term response energy supply and flexibility resource (150) includes at least one of an energy storage system, a heat pump, an electrolyzer, and a fuel cell; and the long-term response energy supply and flexibility resource (150) includes at least one of an electrolyzer and a fuel cell.

11. A power smoothing method comprising the steps of:

generating renewable energy power value data by receiving and summing output power values of renewable energy sources (S710);
dividing the renewable energy power value data into a short-term fluctuation component, a medium-term fluctuation component, and a long-term fluctuation component (S720);
calculating a first power command value to be output to a short-term response energy supply and flexibility resource (150) based on the short-term fluctuation component, a second power command value to be output to a medium-term response energy supply and flexibility resource (150) based on the medium-term fluctuation component, and a third power command value to be output to a long-term response energy supply and flexibility resource (150) based on the long-term fluctuation component; and
outputting the first to third power command values to the corresponding energy supply and flexibility resource (150) (S740).

12. The power smoothing method of claim 11, wherein
the step of calculating the first power command value to the third power command value comprises:

calculating short-term, medium-term, and long-term power target values (S721);
calculating short-term, medium-term, and long-term sector power command values based on the calculated short-term, medium-term, and long-term power target values (S722);
determining whether the short-term, medium-term, and long-term sector power command values exceed operating ranges of the short-term, medium-term, and long-term sectors (S723); and
outputting, when the short-term, medium-term, and long-term sector power command values are within the operating ranges of the short-term, medium-term, and long-term sectors, the short-term, medium-term, and long-term sector power command values as the first power command value, the second power command value, and the third power command value to the short-term, medium-term, and long-term sectors, respectively (S724).

13. The power smoothing method of claim 12, further comprising the step of:
calculating an energy storage system sector power command value by summing excess amounts of the short-term, medium-term, and long-term sectors when the short-term, medium-term, and long-term sector power command values exceed operating ranges of the short-term, medium-term, and long-term sectors; and outputting the calculated energy storage system sector power command value to the energy storage system sector (S725).

14. The power smoothing method of claim 12, wherein

a short-term power target value ( $P_k^{ref,sec}$ ), a medium-term power target value ( $P_k^{ref,min}$ ), and a long-term power target value ( $P_k^{ref,mins}$ ) are determined for the current ($k$-th) time by the following equations:

$$P_k^{ref,sec} = P_{k-1}^{ref,sec} + \frac{P_k^{sec} - P_{k-n}^{sec}}{n} + offset$$

$$P_k^{ref,min} = P_{k-1}^{ref,min} + \frac{P_k^{min} - P_{k-n}^{min}}{n} + offset$$

$$P_k^{ref,mins} = P_{k-1}^{ref,mins} + \frac{P_k^{mins} - P_{k-n}^{mins}}{n} + offset$$

where $n$ is the number of samples, $P_k^{sec}$ is a $k$-th short-term power measurement value, $P_k^{min}$ is a $k$-th medium-term power measurement value, $P_k^{mins}$ is a $k$-th long-term power measurement value, and *offset* represents a median value of facility capacity.

15. The power smoothing method of claim 14, wherein

a short-term sector power command value ( $P_{sector\#x}^{ref}$ ), a medium-term sector power command value ( $P_{sector\#y}^{ref}$ ), and a long-term sector power command value ( $P_{sector\#z}^{ref}$ ) are determined for the current ($k$-th) time by the following equations:

$$P^{\mathrm{ref}}_{\mathrm{sector\#x}} = \left(P^{\mathrm{ref,sec}}_{k} - P^{\mathrm{sec}}_{k}\right) \times \frac{C_x}{\sum_{x=1}^{a} C_x}$$

$$P^{\mathrm{ref}}_{\mathrm{sector\#y}} = \left(P^{\mathrm{ref,min}}_{k} - P^{\mathrm{min}}_{k}\right) \times \frac{C_y}{\sum_{y=1}^{b} C_y}$$

$$P^{\mathrm{ref}}_{\mathrm{sector\#z}} = \left(P^{\mathrm{ref,mins}}_{k} - P^{\mathrm{mins}}_{k}\right) \times \frac{C_z}{\sum_{z=1}^{c} C_z}$$

where $x$ represents a short-term response resource, $y$ represents a medium-term response resource, $z$ represents a long-term response resource, $a$ represents the total number of short-term response resources, $b$ represents the total number of medium-term response resources, and $c$ represents the total number of long-term response resources.

FIG. 1

<u>100</u>

110       120       130       140       150

| Data Generating Unit | Data Preprocessing Unit | Power Command Calculation Unit | Power Command Output Unit | Energy Supply and Flexibility Resources |
|---|---|---|---|---|

FIG. 2

FIG. 3

FIG. 4

Photovoltaic+Wind Power
Generation Data

120

Data
Preprocessing
Unit

Data Preprocessing Results

Short-Term

Medium-Term

Long-Term

A: Actual Load Fluctuation

B: Long-Term Fluctuation Component;
    3 Minutes to 1 Hour

C: Medium-Term Fluctuation Component;
    10 Seconds to 3 Minutes

D: Short-Term Fluctuation Component;
    Several Seconds to 10 Seconds

FIG. 5

FIG. 6

BESS : Battery Storage Device
FC : Fuel Cell
EZ : Electrolyzer
SC : Supercapacitor
HP : Heat Pump

<Microgrid Sector-Specific Parameters>

| Sector | Category | Value |
|---|---|---|
| SC | Facility Capacity | 30MW |
| | Operating Range | -30~30MW |
| BESS | Facility Capacity | 100MW |
| | Operating Range | -100~100MW |
| HP | Facility Capacity | 70MW |
| | Operating Range | 0~70MW |
| EZ | Facility Capacity | 100MW |
| | Operating Range | 20~100MW |
| FC | Facility Capacity | 50MW |
| | Operating Range | 0~50MW |

FIG. 7

EP 4 765 546 A1

Measure Renewable Energy Ouput — S710

Real-time Data Preprocessing — S720

Level1(Short-Term)

Level2(Medium-Term)

Level3(Long-Term)

$$P_k^{ref,\,sec} = P_{k-1}^{ref,\,sec} + \frac{P_k^{ref,\,sec} - P_{k-n}^{ref,\,sec}}{n} + \text{offset}$$

$$P_k^{ref,\,min} = P_{k-1}^{ref,\,min} + \frac{P_k^{ref,\,min} - P_{k-n}^{ref,\,min}}{n} + \text{offset}$$ — S721

$$P_k^{ref,\,mins} = P_{k-1}^{ref,\,mins} + \frac{P_k^{ref,\,mins} - P_{k-n}^{ref,\,mins}}{n} + \text{offset}$$

S721

$P_{sector\#x}^{ref}$ — S722   S721

$P_{sector\#y}^{ref}$ — S722   S721

$P_{sector\#z}^{ref}$ — S722

$-$ sector Operating Range $< P_{sector\#x}^{ref} <$ + sector Operating Range — S723

$\text{abs}(P_{sector\#y}^{ref}) >$ sector Operating Range — S723

$-$ sector Operating Range $< P_{sector\#z}^{ref} <$ + sector Operating Range — S723

$P_{com\#x}^{ref} = P_{sector\#x}^{ref} -$ sector Operating Range

$P_{com\#y}^{ref} = P_{sector\#y}^{ref} -$ sector Operating Range

$P_{com\#z}^{ref} = P_{sector\#z}^{ref} -$ sector Operating Range

$P_{sector\#x}^{ref} =$ sector Operating Range

$P_{sector\#y}^{ref} =$ sector Operating Range

$P_{sector\#z}^{ref} =$ sector Operating Range

$$P_{sector\,ESS}^{ref} = \text{compensation value} \left(= \sum_{x,y,z}^{a,b,c} P_{com\#x,y,z}^{ref}\right)$$

Transmit Command Value $P_{sector\#x}^{ref}$ — S724

S725   Transmit Command Value $P_{sector\,ESS}^{ref}$

S724   Transmit Command Value $P_{sector\#y}^{ref}$

S724   Transmit Command Value $P_{sector\#z}^{ref}$

Output to Energy Supply & Flexibility Resources

S740

20

## EUROPEAN SEARCH REPORT

**Application Number**

EP 25 22 6837

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 808 613 A (UNIV NORTH CHINA ELECTRIC POWER; CHINA ELECTRIC POWER RES INST CO LTD) 18 February 2020 (2020-02-18) | 1-8,11, 12,14,15 | INV. H02J3/28 H02J3/32 H02J3/38 |
| Y | * paragraph [0001] - paragraph [0016]; figures 1-3 * | 10 | |
| | ----- | | |
| X | CN 118 589 458 A (ZHEJIANG XINNENG SOLAR PHOTOVOLTAIC TECH CO LTD) 3 September 2024 (2024-09-03) | 1-8,11, 12,14,15 | |
| Y | * paragraph [0001] - paragraph [0024]; figure 2 * | 10 | |
| | ----- | | |
| X | CN 117 200 272 A (UNIV SICHUAN) 8 December 2023 (2023-12-08) | 1-8,11, 12,14,15 | |
| Y | * paragraph [0001] - paragraph [0107]; figures 1,2 * | 10 | |
| | ----- | | |
| A | LAMSAL DIPESH ET AL: "Output power smoothing control approaches for wind and photovoltaic generation systems: A review", RENEWABLE AND SUSTAINABLE ENERGY REVIEWS ELSEVIERS SCIENCE, NEW YORK, NY., US, vol. 113, 5 July 2019 (2019-07-05), XP085790249, ISSN: 1364-0321, DOI: 10.1016/J.RSER.2019.109245 [retrieved on 2019-07-05] * page 1 - page 18 * | 1-15 | TECHNICAL FIELDS SEARCHED (IPC) H02J |
| | ----- | | |
| A | CN 117 039 967 A (NORTH CHINA ELECTRIC POWER UNIV BAODING ET AL.) 10 November 2023 (2023-11-10) * paragraph [0001] - paragraph [0023]; figures 1-3 * | 1-15 | |
| | ----- | | |
| | -/-- | | |

The present search report has been drawn up for all claims

| Place of search | Date of completion of the search | Examiner |
|---|---|---|
| Munich | 5 May 2026 | Reissner, Florian |

EPO FORM 1503 03.82 (P04C01)

Europäisches
Patentamt

European
Patent Office

Office européen
des brevets

## EUROPEAN SEARCH REPORT

**Application Number**

EP 25 22 6837

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG YI ET AL: "A hybrid energy storage system with optimized operating strategy for mitigating wind power fluctuations", RENEWABLE ENERGY PERGAMON PRESS, OXFORD., GB, vol. 125, 12 February 2018 (2018-02-12), pages 121-132, XP085394363, ISSN: 0960-1481, DOI: 10.1016/J.RENENE.2018.02.058 * figures 3-5 * | 1-15 | |
| A | GAO ZHIYU ET AL: "Multi-Time scale rolling economic dispatch for integrated electricity-heating systems based on improved variational mode decomposition", ELECTRIC POWER SYSTEMS RESEARCH ELSEVIER, AMSTERDAM, NL, vol. 187, 18 June 2020 (2020-06-18), XP086235321, ISSN: 0378-7796, DOI: 10.1016/J.EPSR.2020.106468 [retrieved on 2020-06-18] * Sect. 1-3; figures 1-5 * | 1-15 | TECHNICAL FIELDS SEARCHED (IPC) |
| A | CN 117 810 954 A (SUQIAN POWER SUPPLY BRANCH OF STATE GRID JIANGSU ELECTRIC POWER CO LTD) 2 April 2024 (2024-04-02) * figures 1,2 * | 1-15 | |

-/--

The present search report has been drawn up for all claims

| Place of search | Date of completion of the search | Examiner |
|---|---|---|
| Munich | 5 May 2026 | Reissner, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

page 2 of 3

Europäisches
Patentamt

European
Patent Office

Office européen
des brevets

# EUROPEAN SEARCH REPORT

**Application Number**

EP 25 22 6837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CAO JUN ET AL: "Optimal Sizing and Control Strategies for Hybrid Storage System as Limited by Grid Frequency Deviations", IEEE TRANSACTIONS ON POWER SYSTEMS IEEE, USA, vol. 33, no. 5, 1 September 2018 (2018-09-01), pages 5486-5495, XP011689131, ISSN: 0885-8950, DOI: 10.1109/TPWRS.2018.2805380 [retrieved on 2018-08-22] * Sect. I-III; figures 1-5 * | 1-15 | |

TECHNICAL FIELDS
SEARCHED     (IPC)

The present search report has been drawn up for all claims

| Place of search | Date of completion of the search | Examiner |
|---|---|---|
| Munich | 5 May 2026 | Reissner, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 6837

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2026

| Patent document cited in search report | | Publication date | Patent family member(s) | | Publication date |
|---|---|---|---|---|---|
| CN 110808613 | A | 18-02-2020 | NONE | | |
| CN 118589458 | A | 03-09-2024 | CN | 118589458 A | 03-09-2024 |
| | | | WO | 2025241631 A1 | 27-11-2025 |
| CN 117200272 | A | 08-12-2023 | NONE | | |
| CN 117039967 | A | 10-11-2023 | NONE | | |
| CN 117810954 | A | 02-04-2024 | NONE | | |

EPO FORM P0459

For more details about this annex : see Official Journal of the European Patent Office, No. 12/82